# EUROPEAN PATENT SPECIFICATION

(11) **EP 4 475 311 B1**
(45) Date of publication and mention of the grant of the patent: **15.07.2026**
(21) Application number: 23868360.1
(22) Date of filing: 26.07.2023
(51) Int. Cl.: H01M 50/291, H01M 50/367, H01M 50/30, H01M 50/502, H01M 50/249, H01M 50/204, H01M 50/264, H01M 50/289, H01M 50/325, H01M 50/531, H01M 50/50

(54) **BATTERY PACK WITH ENHANCED SAFETY**
BATTERIEPACK MIT VERSTÄRKTER SICHERHEIT
BLOC-BATTERIE À SÉCURITÉ RENFORCÉE

(30) Priority: 22.09.2022 KR 20220120163
(43) Date of publication of application: 11.12.2024
(73) Proprietor: LG Energy Solution, Ltd., Seoul 07335 (KR)
(72) Inventor: JANG, Sung-Hwan, Daejeon 34122 (KR); SEONG, Jun-Yeob, Daejeon 34122 (KR)
(74) Representative: Plasseraud IP
(86) International application number: PCT/KR2023/010862
(87) International publication number: WO 2024/063300

(56) References cited:
- CN-A- 107 528 019
- CN-B- 105 552 261
- CN-B- 112 531 246
- KR-A- 20140 126 535
- KR-A- 20180 132 338
- KR-A- 20190 110 782
- KR-A- 20220 008 558
- KR-A- 20220 014 027
- KR-A- 20220 014 027

## Description

### TECHNICAL FIELD

The present disclosure relates to a battery pack or the like, and more specifically, to a battery pack or the like that enhance safety in the event of a thermal event, especially the safety of an electrical connection structure.

### BACKGROUND ART

As the demand for portable electronic products such as laptops, video cameras, and mobile phones that use electricity as a driving source is rapidly increasing, and mobile robots, electric bicycles, electric carts, electric vehicles, and the like are becoming widely commercialized, high-performance secondary batteries allowing repetitive charging and discharging are being actively researched.

Commercially available secondary batteries include nickel cadmium batteries, nickel hydrogen batteries, nickel zinc batteries, and lithium secondary batteries. Among them, lithium secondary batteries have little memory effect compared to nickel-based secondary batteries, so they can be freely charged and discharged, have an extremely low lower self-discharge rate, and also have high energy density and high operating voltage. Thus, lithium secondary batteries are being studied more intensively than other types of secondary batteries and are also being applied more extensively to actual products.

Recently, secondary batteries have been widely used not only in small devices such as portable electronic devices, but also in medium or large devices such as electric vehicles and energy storage systems (ESS).

**In** this case, a battery module in which a plurality of electrically connected secondary batteries are stored together inside the module case is mainly applied. Moreover, when high power or large capacity is required, a battery pack in which a plurality of battery modules are electrically connected may also be applied.

Although secondary batteries with these advantages are used more and more in various forms, due to the behavior of secondary batteries, a thermal runaway phenomenon or the like may occur therein due to swelling, application of rush current, and overheating due to Joule heating, or decomposition reaction of the electrolyte.

In addition, if an event such as a short circuit between secondary batteries or excessive temperature rise occurs, a large amount of venting gas may be generated, and if it worsens, not only flames but also high-temperature particles including electrode active material and aluminum particles may leak together. Thus, it is more important to ensure the safety of the battery module.

The battery module or battery pack may be more vulnerable to thermal events because a plurality of secondary batteries (battery cells) or a plurality of battery modules are space-intensively crowded. In particular, when thermal runaway occurs inside the battery module, high temperature gas, flame, heat, and the like are generated, and if they are not quickly controlled, thermal propagation may occur, which may cause a chain fire or explosion in the relevant battery module as well as adjacent battery modules.

In the case of medium or large battery packs applied to vehicles such as electric vehicles that users ride, a large number of battery cells and battery modules are installed more intensively to increase output and capacity, which may cause not only large-scale fires but also human damage. Therefore, there is a great need to more robustly suppress and control thermal events that may occur in battery modules or the like from the initial stage.

The battery pack is configured to have an electrical connection structure such as a bus bar made of conductive material that electrically connects the electrodes of individual battery modules to each other for the purpose of configuring the electrodes of battery packs.

Since the configuration for electrical connection such as a bus bar corresponds to a configuration of electrically connecting a plurality of battery modules in series, parallel, or a combination thereof, the bus bar or/and the terminal electrically connected by the bus bar is damaged due to thermal events generated in the battery module, the operation of the battery pack itself may be paralyzed, and also fatal damage such as an electrical short may occur, which may trigger more serious safety problems.

Furthermore, since the bus bars and the module terminals of the battery module have configured to be electrically connected to each other, when this structure is exposed to a thermal event, the transition of the thermal event may be more easily diffusely accelerated through the electrical connection structure. Therefore, it is more important to secure safety therefore.

CN105552261, in accordance with its abstract, discloses a battery housing part for a traction battery for pure-power driving of a motor vehicle having opposite first and second vertically aligned housing walls for laterally covering battery cells, a second housing wall from a floor level to a cover level and horizontally from a left side level to a right-side level. At least one reinforcement profile is connected to the first housing wall and the second housing wall for at least partial dissipation of impact forces in the case of a crash of the motor vehicle. The reinforcement profile is spaced apart both from the floor level and the cover level and from the left side level and the right-side level.

CN112531246, in accordance with its abstract, discloses a battery tray comprising a tray body, wherein the tray body comprises a bottom plate, side beams and a plurality of partition plates, wherein the side beams are arranged on the periphery of the bottom plate; the partition plates are arranged on the bottom plate and divide the bottom plate into a plurality of containing spaces used for containing single batteries or battery modules.

### DISCLOSURE

### Technical Problem

The present disclosure is designed to solve the problems of the related art, and therefore the present disclosure is directed to providing a battery pack or the like that further enhance safety by applying an improved structure such as physically dividing the space where electrical connection components such as bus bars are located.

The technical problem to be solved by the present disclosure is not limited to the above, and other problems not mentioned herein will be clearly understood by those skilled in the art from the following disclosure.

### Technical Solution

In one aspect of the present disclosure, there is provided a battery pack, comprising: a pack housing; a battery module having a module terminal connected by a bus bar; a module accommodation unit installed in the pack housing to provide an accommodation space in which the battery module is accommodated; and a splitter configured to divide a part or all of the accommodation space so that the bus bar is located in an independent space.

According to claim 1, the splitter of the present disclosure further includes a body plate connected to at least one of inner surfaces of the module accommodation unit and having a perforation hole formed in a center portion thereof to have a shape corresponding to the battery module.

According to claim 1, the splitter of the present disclosure further includes a guider having a shape extending in a vertical direction to guide the coupling of the battery module, and in this case, the end of the guider may be connected to a bottom surface of the pack housing or the module accommodation unit.

In addition, the module accommodation unit of the present disclosure may include a first plate installed in a direction where the module terminal of the battery module is located; a second plate installed in a direction opposite to the first plate; and a side plate configured to connect the first and second plates, and the second plate may have a venting hole formed to communicate with a venting path formed by the space between a side frame of the pack housing and the module accommodation unit.

Preferably, the venting hole of the present disclosure may be formed at a position lower than the height of the splitter when the bus bar is located in the upper space among the spaces divided by the splitter, and the venting hole may be formed at a position higher than the height of the splitter when the bus bar is located in the lower space among the spaces divided by the splitter.

Furthermore, the splitter of the present disclosure may further include at least one reverse flow blocking unit provided on the lower surface of the body plate to selectively suppress a reverse flow toward the module terminal while a venting gas is flowing.

In this case, the reverse flow blocking unit of the present disclosure may include a rotation member rotatably connected to the lower portion of the body plate and configured to form an angle of 90 degrees or less with the body plate at ordinary time; and a stopper configured to prevent the rotation member from rotating beyond a reference angle due to the reverse flow.

In addition, the first plate of the present disclosure may have a placing groove in which the bus bar is placed or a through hole through which the bus bar passes.

Furthermore, the bus bar of the present disclosure may include a first branch connected to the module terminal of a first battery module located on one side based on the first plate; a second branch connected to the module terminal of a second battery module located on the other side based on the first plate; and a bridge configured to connect the first and second branches and having a part corresponding to the height of the first plate.

In another aspect of the present disclosure, there is provided a vehicle, comprising the battery pack according to the present disclosure.

### Advantageous Effects

According to the present disclosure, since the structure is improved so that the accommodation space where each battery module is accommodated is individualized and this individualized accommodation space is linked to a venting channel that leaks a venting gas to the outside, it is possible to strongly suppress the thermal event from spreading to other adjacent battery modules, and it is also possible to discharge the venting gas to the outside more effectively.

In particular, according to one aspect of the present disclosure, since the impact of thermal events such as venting gas and flames on the electrical connection components may be minimized by effectively isolating the electrical connection components, such as bus bars and module terminals, it is possible to prevent serious errors such as paralysis of the entire battery pack operation in advance, and it is also possible to fundamentally prevent the thermal events from spreading through the electrical connection structure, thereby securing the structural safety of the battery pack itself more effectively.

In addition, according to an embodiment of the present disclosure, by applying a structure in which the configuration of physically dividing the accommodation space of the battery module and the physical configuration of the pack housing are combined with each other, it is possible to support the battery module more firmly and stably, and it is also possible to improve the efficiency of the assembly process and structurally reinforce the durability of the pack housing itself.

In addition, the present disclosure may have various other effects, and they will be explained in each embodiment, or effects that can be easily inferred by a person skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing the overall appearance of a battery pack according to an embodiment of the present disclosure.
FIG. 2 is a diagram showing the internal configuration of the battery pack according to an embodiment of the present disclosure.
FIG. 3 is a diagram showing a battery module provided in the battery pack according to an embodiment of the present disclosure.
FIG. 4 is a drawing for illustrating a module accommodation unit and related components in the present disclosure.
FIG. 5 is a diagram showing that the battery module is coupled with the module accommodation unit in the present disclosure.
FIG. 6 is a diagram showing the detailed configuration of a splitter according to a preferred embodiment of the present disclosure.
FIGS. 7 to 9 are diagrams showing the structure of a splitter according to another embodiment of the present disclosure.
FIGS. 10 and 11 are diagrams for illustrating a path through which a venting gas or the like is discharged.
FIG. 12 is a diagram for illustrating a reverse flow blocking unit according to an embodiment of the present disclosure.
FIG. 13 is a diagram for illustrating the operational relationship of the reverse flow blocking unit according to an embodiment of the present disclosure.
FIG. 14 is a diagram for illustrating a reverse flow blocking unit according to another embodiment of the present disclosure.
FIG. 15 is a diagram for illustrating a reverse flow blocking unit according to still another embodiment of the present disclosure.
FIG. 16 is a diagram for illustrating a reverse flow blocking unit according to still another embodiment of the present disclosure.
FIG. 17 is a diagram for illustrating a reverse flow blocking unit according to still another embodiment of the present disclosure.
FIGS. 18 and 19 are diagrams for illustrating the structure of a bus bar and a first plate according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure includes many different embodiments. For each embodiment, the same or similar components will not be described in detail, and different features will be described in detail.

Meanwhile, in this specification, terms indicating directions such as "upper", "lower", "left", "right", "front", and "rear" may be used, but these terms are only for convenience of explanation, and it is obvious to those skilled in the art that these terms may vary depending the location of the a object or the location of an observer.

For example, in the embodiment of the present disclosure, the X-axis direction shown in the drawing may refer to the left and right direction, the Y-axis direction may refer to the front and rear direction perpendicular to the X-axis direction on the horizontal plane (XY plane), and the Z-axis direction may refer to the upper and lower direction (vertical direction) perpendicular to both the X-axis direction and the Y-axis direction.

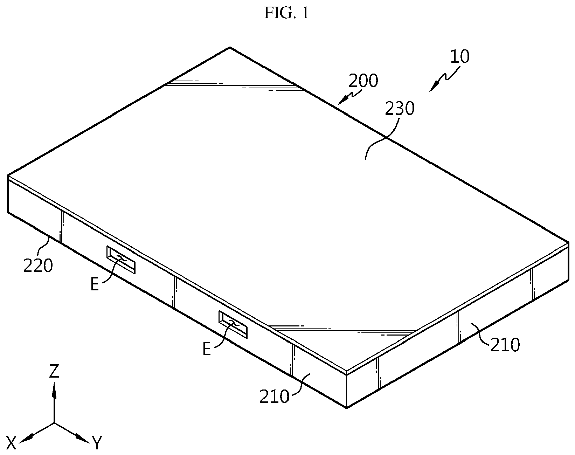

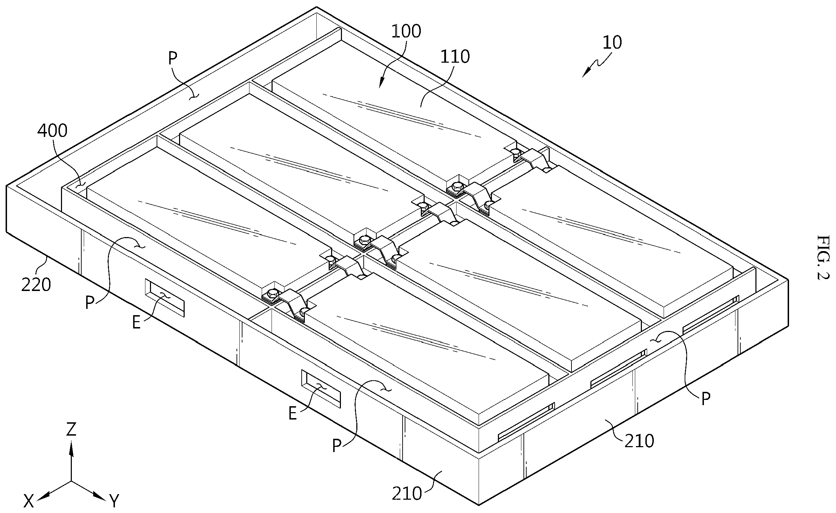

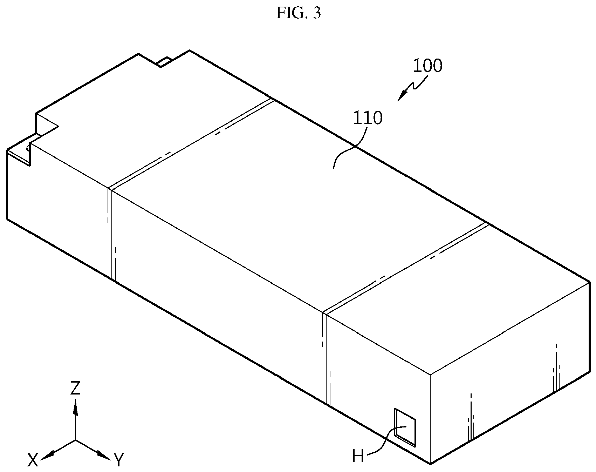

FIG. 1 is a perspective view showing the overall appearance of a battery pack according to an embodiment of the present disclosure, FIG. 2 is a diagram showing the internal configuration of the battery pack according to an embodiment of the present disclosure, and FIG. 3 is a diagram showing a battery module provided in the battery pack according to an embodiment of the present disclosure.

As illustrated in the drawings, the battery pack 10 of the present disclosure may include a pack housing 200, a battery module 100, and a module accommodation unit 400.

The pack housing 200 is a configuration that provides the basic skeletal structure of the battery pack 10, and provides a space to accommodate at least one battery module 100 through the module accommodation unit 400. Specifically, the pack housing 200 according to an embodiment of the present disclosure may be configured to include an upper frame 230, a lower frame 220, and a side frame 210.

At least one of the upper frame 230, the lower frame 220, and the side frame 210 may be configured in a plate shape, but may also be configured in the form of a polyhedron (for example, a rectangular parallelepiped) having a certain thickness or more.

The upper frame 230 is located in the upper portion of the pack housing 200, the lower frame 220 may be disposed at the lower portion of the upper frame 230 to be spaced apart by a predetermined distance from the upper frame 230, and the side frame 210 may be disposed between the upper frame 230 and the lower frame 220 so that the upper end and the lower end thereof are connected thereto.

Depending on the embodiment, at least some of the upper frame 230, the lower frame 220, and the side frame 210 may be configured in an integrated form, and the connection between adjacent frames may be performed by fastening flanges and bolts as well as by laser welding or ultrasonic welding.

The inner surface of at least one of the upper frame 230, the lower frame 220, and the side frame 210 may be made of clad metal, or a flame retardant material such as GFRP may be attached to the inner surface.

At least one of the frames 210, 220, 230 that constitute the pack housing 300 may be made of a metal material such as high-strength SUS (stainless steel) or a plastic material such as ABS resin (acrylonitrile-butadiene-styrene copolymer) with high heat resistance, temperature resistance, and impact resistance in order to effectively protect the internal components, and depending on the embodiment, different parts may be made of different materials.

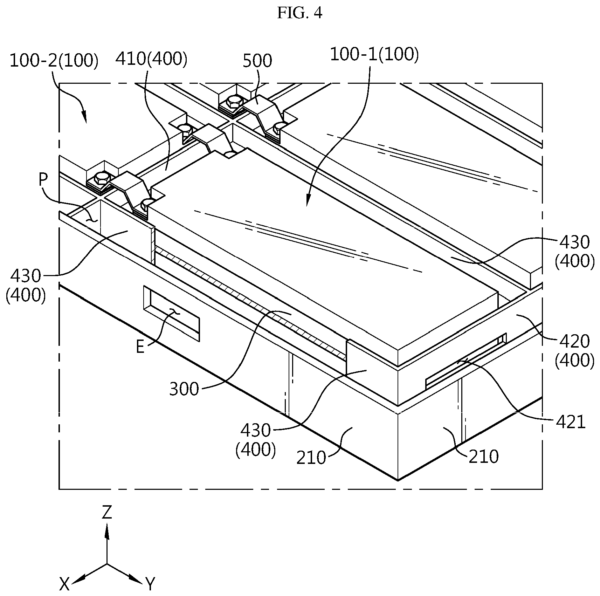

As illustrated in the drawings, the module accommodation unit 400 (see FIGS. 3 and 4) in which each battery module 100 is individually accommodated is provided inside the pack housing 200. The module accommodation unit 400 functions as a kind of independent chamber or compartment to not only physically protect the individual battery module 100, but also primarily prevent the thermal event generated in the battery module 100 from spreading or transferring to other adjacent battery modules 100. The module accommodation unit 400 will be described later in more detail.

As shown in the drawings, the module accommodation unit 400 is preferably installed at a position spaced inward based on at least one side frame 210 so that a space P is formed between the side frame 210 constituting the pack housing 200 and the module accommodation unit 400.

In this configuration, the space P may be used as a venting channel P through which a venting gas generated in the battery module 100 is discharged, and depending on the embodiment, the venting channel P may be formed in a kind of track shape that encompasses the outer circumference of a plurality of module accommodation units 400 as illustrated in the drawings, so that the venting gas generated in each battery module 100 may be effectively discharged to the outside of the pack housing 200 through a discharge port E or the like formed in the side frame 210.

More preferably, a guider or a venting rib of a bent shape or the like, a bending member for changing direction, or the like may be provided to the venting channel P or the like, though not shown in the drawings, so that, when flame is discharged together with the venting gas, the strong straightness of the flame is destroyed and the flame is resultantly weakened.

It is also desirable that each plate constituting the module accommodation unit 400 and each frame constituting the pack housing 200 are made of a material with high heat resistance and physical rigidity.

The drawings show an example in which the battery modules 100, which form a 2X3 matrix group based on the vertical (X axis) and horizontal (Y axis) direction, are accommodated in the pack housing 200, but it is also possible that battery modules 100 having various combinatorial arrangements such as 2X4, 2X2, 4X3 matrix groups or the like are provided in the pack housing 200 through the module accommodation unit 400 depending on the spatial characteristics, electrical capacity, power magnitude, or the like of the applied device.

Referring to FIG. 2, the battery module 100 accommodated in the module accommodation unit 400 may include a module case 110 and a cell assembly (not shown) accommodated inside the module case 110. The cell assembly is made up of n (n is a natural number greater than or equal to 1) battery cells, and each lead of the n battery cells is assembled through a coupling method such as welding or a method mediated by a member of a conductive material to form a battery module terminal 120, which is an electrical interfacing electrode of the battery module 100.

The battery cells assembled through the battery module 100 may be secondary batteries, and the secondary battery may be a pouch-shaped cell, a cylindrical cell, or a prismatic cell.

The method of configuring a battery module using a plurality of battery cells is a well-known technology in the art, and is not a core technology of the present disclosure, so it will not be described in detail here.

Meanwhile, referring to FIG. 3, each battery module 100 included in the battery pack 10 according to an embodiment of the present disclosure may have a discharge hole H. The discharge hole H may be provided in at least one side of the module case 110 to discharge a venting gas or the like. As an example, as shown in FIG. 3, the discharge hole H may be provided in both sides of the module case 110. Here, both sides may be symmetrical and face each other along the left and right direction of the battery module 100. Also, a plurality of battery modules 100 may be accommodated within the module accommodation units 400, respectively, such that the discharge hole H is disposed adjacent to the module terminal 120.

By doing so, according to this embodiment of the present disclosure, when a thermal runaway phenomenon occurs in the battery module 100, the venting gas generated in the battery module 100 may be directional-vented to both sides of the battery module 100 through the discharge hole H. Also, the venting gas discharged through the discharge hole H may pass through the space within the module accommodation unit 400 and be discharged into the venting channel P. Therefore, when thermal runaway occurs in a plurality of battery modules 100 at the same time, the venting gas or the like may be more quickly guided to the venting channel P and discharged to the outside of the pack housing 200.

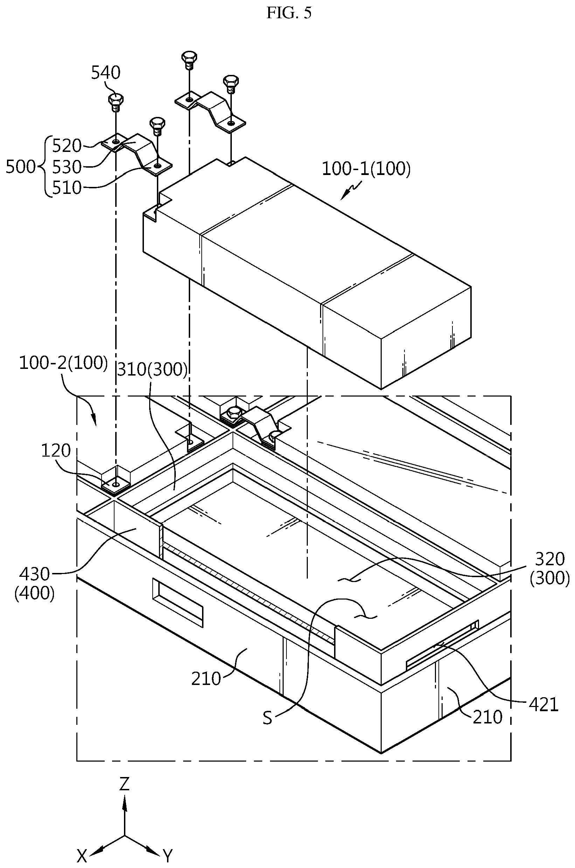

A plurality of battery modules 100 provided in the pack housing 200 are electrically connected to each other in parallel, series, or a combination thereof according to appropriate specifications or design requirements required by the battery pack 10. As an example, the drawings show that the module terminals 120 (see FIG. 5 or the like) of the same polarity provided on the battery modules 100 facing each other in the longitudinal direction (Y-axis direction) are connected to each other by the bus bar 500.

In the drawings, the electrical connection by the bus bar 500 and the configuration such as the battery modules 100 electrically connected to each other by the bus bar 500 are shown in a somewhat simplified form in order to effectively explain the technical idea of the present disclosure, but it is obvious that a connector structure or the like for connecting the bus bars 500 to each other may be further included.

FIG. 4 is a drawing for illustrating a module accommodation unit 400 and related components in the present disclosure, and FIG. 5 is a diagram showing that the battery module 100 is coupled with the module accommodation unit 400 in the present disclosure.

As shown in FIGS. 4 and 5, the splitter 300 of the present disclosure is provided to the module accommodation unit 400 to dually divide the space S (hereinafter, referred to as 'accommodation space') (see FIG. 5), in which the battery module 100 is accommodated, into upper and lower spaces or the like.

The splitter 300 of the present disclosure divides the accommodation space into upper and lower spaces, and physically divides the accommodation space so that the module terminals 120 of the first and second battery modules 100-1, 100-2 and the bus bar 500 for electrically connecting these module terminals 120 to each other are located in an independent space. To enhance convenience of explanation and understanding, as shown in the drawings, it is assumed that one of the two battery modules 100 electrically connected by the bus bar 500 is the first battery module 100-1 and the other is the second battery module 100-2.

In other words, the splitter 300 of the present disclosure is configured to partially divide the accommodation space into an upper sector and a lower sector, so that the terminal of the battery module 100 and the bus bar 500 are located in the upper sector.

Since, the terminal of the battery module 100 and the bus bar 500 are components for implementing an electrical connection between the battery modules 100 to form an electrode of the battery pack 10 as previously described, if this configuration is exposed to a thermal event generated in the battery module 100, a fatal safety accident may occur, such as stopping the operation of the entire battery pack 10.

The splitter 300 of the present disclosure functions not only to fundamentally block the electrode or/and the bus bar 500 from being exposed to a venting gas or the like, but also to induce the generated venting gas or the like to be discharged to the outside more effectively through the discharge port E formed in the side frame 210 or the like, even if a thermal event such as venting gas occurs in some battery module 100.

Typically, since the module terminal 120 of the battery module 100 is provided to the upper portion of the battery module 100, if the accommodation space is physically divided dually by the splitter 300 of the present disclosure as above, the module terminal 120 and the bus bar 500 are preferably configured to be disposed in the upper space (sector) among the spaces divided by the splitter 300.

Referring to FIG. 3, when the battery module 100 has a discharge hole H, the discharge hole H may be provided at the lower portion of the side of the module case 110. That is, the discharge hole H may be configured to be disposed in the lower space (sector) among the spaces divided by the splitter 300. According to this embodiment of the present disclosure, the venting gas discharged through the discharge hole H may be blocked from moving toward the module terminal 120 and the bus bar 500 provided in the upper space by the splitter 300. As a result, the possibility that the module terminal 120 and the bus bar 500 are exposed to the venting gas or the like may be fundamentally prevented.

Depending on the embodiment, when the module terminal 120 of the battery module 100 is provided at the lower portion of the battery module 100, the module terminal 120 and the bus bar 500 may be disposed in the lower space (sector) among the spaces divided by the splitter 300.

So that the module accommodation unit 400 of the present disclosure can function as a kind of compartment or chamber in which the battery module 100 is accommodated, the module accommodation unit 400 of the present disclosure may be configured to include a first plate 410, a second plate 420, and a side plate 430, which have an upright shape in the vertical direction (Z-axis) like a kind of barrier as shown in the drawings.

In order to enhance the efficiency of explanation and understanding, among these plates 410, 420, 430, the plate installed in a direction where the terminals of the battery module 100 are located is referred to as a first plate 410, the plate installed in a direction opposite to the first plate 410 is referred to as a second plate 420, and the plate configured to connect the first and second plates 410, 420 is referred to as a side plate 430.

The individual module accommodation unit 400 may be formed by its own independent plates, and depending on the embodiment, module accommodation units 400 adjacent in the longitudinal direction (Y-axis direction) and the transverse direction (X-axis direction) as illustrated in the drawing may be formed to share the first plate 410 or the side plate 430.

As shown in the drawings, the second plate 420 may have a venting hole 421 that communicates with a venting path (venting channel) P formed by the space between the side frame 210 of the pack housing 200 and the module accommodation unit 400 described above. The configuration of the present disclosure for allowing the venting gas or the like generated in the battery module 100 to be discharged to the outside of the pack housing 200 through the venting hole 421 or the like will be described later in detail.

The splitter 300 of the present disclosure is a component that divides the accommodation space of the module accommodation unit 400 into upper and lower spaces, and may specifically include a body plate 310 and a perforation hole 320.

The body plate 310 is a plate extending in the horizontal direction, and is physically connected to at least one of the inner surfaces of the module accommodation unit 400 as illustrated in the drawings, and has a perforation hole 320 formed in the center portion and having a shape corresponding to the battery module 100.

According to this embodiment, since the battery module 100 is coupled to the perforation hole 320 in a fitting manner, the battery module 100 may be installed more easily, and also the accommodation space may be divided into independent upper and lower spaces by the physical configuration of the body plate 310 of the splitter 300 and the battery module 100 itself.

Furthermore, since the module terminal 120 and the bus bar 500 are provided at the upper portion of the battery module 100 as described above, the module terminal 120 and the bus bar 500 are located in the upper space divided by the splitter 300, and thus may be separated or independent from other occupied spaces of the battery module 100.

Since the splitter 300 of the present disclosure is configured to separate the module terminal 120 and the bus bar 500 into an independent space and to block the influence of thermal event generated in the battery module 100 on the bus bar 500 or the like, the splitter 300 is preferably formed at a position biased in the upward direction (Z-axis direction) as much as possible within the range that can physically block he module terminal 120 and the bus bar 500.

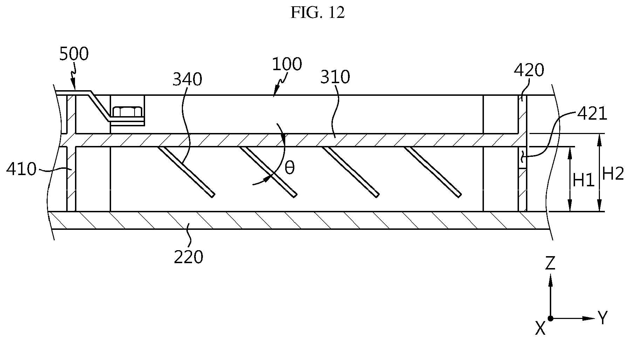

From a corresponding point of view, in order to further minimize the influence of the venting gas or the like on the bus bar 500 or the like, which is blocked by the splitter 300, and to induce the venting gas or the like to be discharged to the outside more quickly, the venting hole 421 formed in the second plate 420 of the module accommodation unit 400 is preferably formed at a position H1 (see FIG. 12) lower than the height (H2) of the splitter 300.

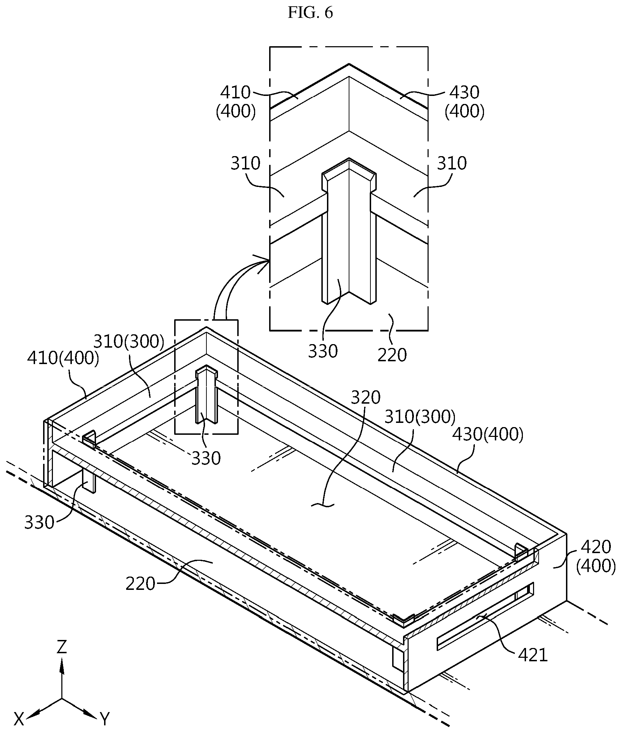

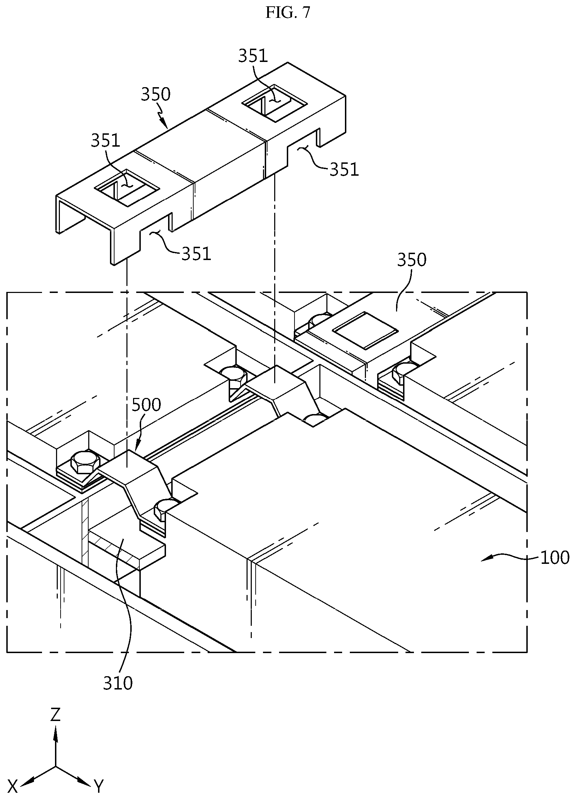

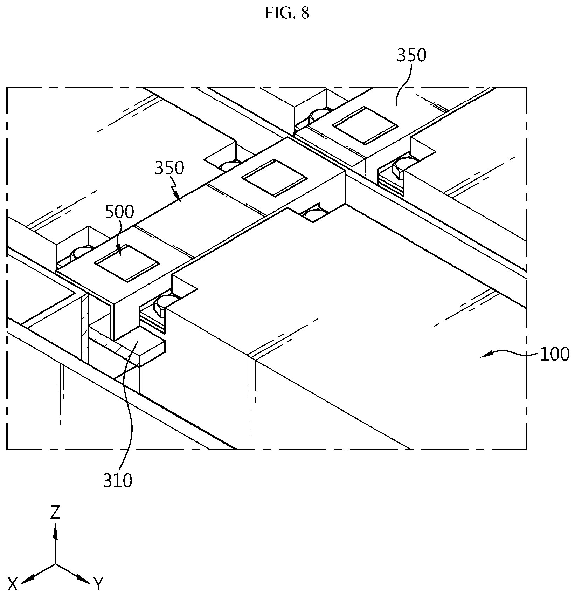

FIG. 6 is a diagram showing the detailed configuration of a splitter 300 according to a preferred embodiment of the present disclosure, and FIGS. 7 to 9 are diagrams showing the structure of a splitter 300 according to another embodiment of the present disclosure.

The splitter 300 according to the invention further includes a guider 330 having a shape extending in the vertical direction (Z-axis direction) as shown in FIG. 6.

The guider 330 guides the battery module 100 to be more easily coupled to the accommodation space S, namely the perforation hole 320 in the center portion of the body plate 310, and physically supports the battery module 100 more firmly.

More preferably, as shown in FIG. 6, the guider 330 of the present disclosure may be configured to have a shape in which a plate bent at a perpendicular or equivalent angle to correspond to the shape of the edge of the battery module 100 extends in the vertical direction.

The guider 330 may be installed at the inner corner of the perforation hole 320, and is preferably configured to be coupled to the lower frame 220 of the pack housing 200. If a bottom surface is formed in the module accommodation unit 400 or a cooling pad or a heatsink is installed on the bottom surface, the lower end of the guider 330 may be configured to be coupled to the bottom surface of the module accommodation unit 400 or the heatsink or the like.

According to this embodiment of the present disclosure, since the splitter 300, specifically the guider 330 physically connected to the body plate 310 of the splitter 300, is coupled with the pack housing 200 again in the vertical direction, the durability of the pack housing 200 itself may be enhanced structurally, and the positioning power of the battery module 100 may also be further improved.

As shown in FIG. 7, the battery pack 10 of the present disclosure may further include a blocking cover 350 configured to cover the upper portion of the bus bar 500 and physically coupled with the body plate 310 of the splitter 300 to form the area where the bus bar 500 is located as a more independent blocking space.

In this case, the body plate 310 of the splitter 300 may not be formed over the entire inner surface of the module accommodation unit 400, but may be formed only on the first plate 410.

Depending on the embodiment, the blocking cover 350 may have a guide groove 351 through which a portion of the body of the bus bar 500 passes or guides to avoid physical interference with the bus bar 500.

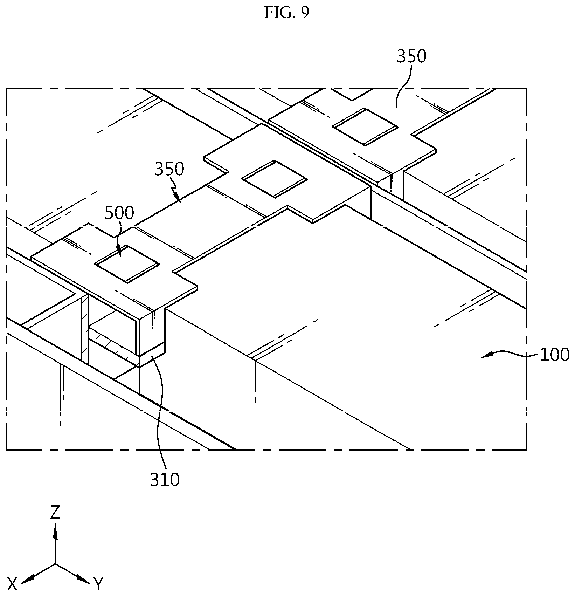

In addition, as shown in FIG. 9, the blocking cover 350 of the present disclosure may be implemented not only to cover the bus bar 500, but also to cover the bus bar 500 and the module terminal 120 as a whole.

In the embodiment in which the blocking cover 350 is installed as above, in order to maintain airtightness when the upper frame 230 of the pack housing 200 is coupled, various methods, such as adjusting the height of the first plate 410 or the side plate 430 or forming a groove or step on the upper side, may be applied.

According to this embodiment of the present disclosure, since only the minimum local area where the bus bar 500 is located may be isolated into an independent space, it is possible to further increase space utilization, and the space separation for the battery module 100 may be applied more expansively.

The blocking cover 350 may be physically coupled with a single body plate 310 formed in an individual module accommodation unit 400. However, if the blocking cover 350 has a structural shape that is physically coupled with all of the plurality of body plates 310 respectively formed in the adjacent module accommodation units 400 as illustrated in the drawings, the efficiency of the assembly process may be further enhanced.

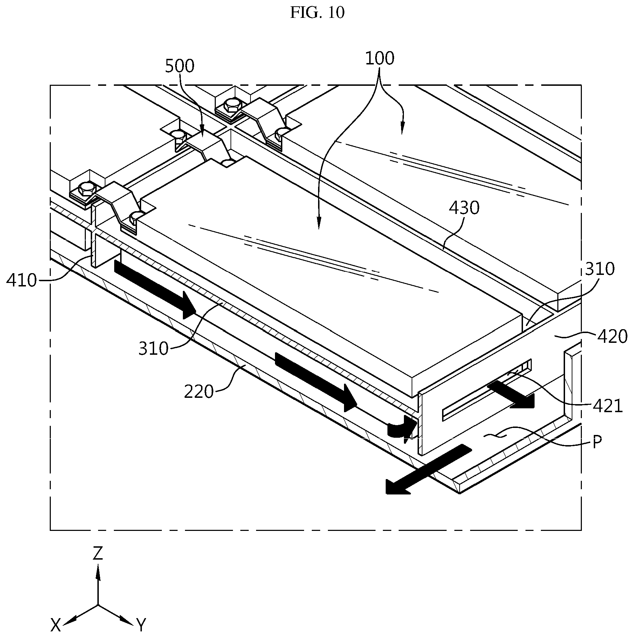

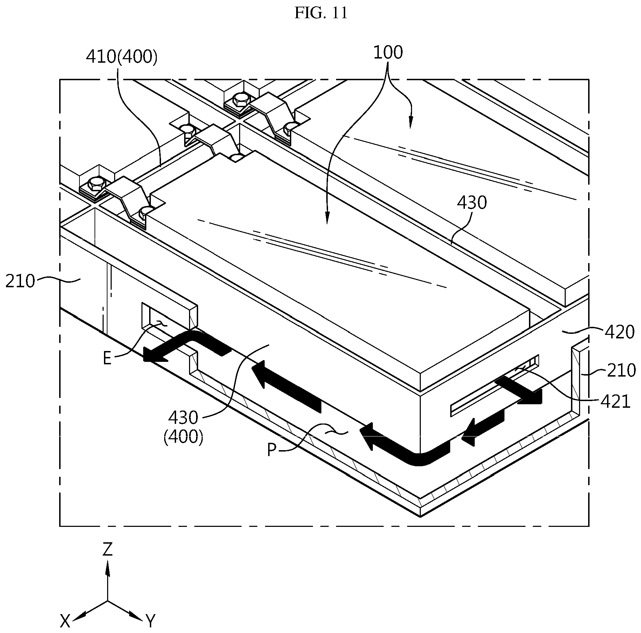

FIGS. 10 and 11 are diagrams for illustrating a path through which a venting gas or the like is discharged through the configuration of the present disclosure.

The venting gas or the like generated from the battery module 100 has the physical characteristics of high temperature and high pressure, and thus has an upward movement characteristic, but as described above, its upward movement is blocked by the splitter 300 of the present disclosure. Furthermore, since its forward movement (negative Y-axis direction) is blocked by the first plate 410, the venting gas or the like moves rearward through the space between the lower portion of the body plate 310, which is a component of the splitter 300, and the side plate 430.

The venting gas or the like, which moves rearward, exits the module accommodation unit 400 through the venting hole 421 formed in the second plate 420, and the venting gas or the like discharged from the module accommodation unit 400 moves to the space between the module accommodation unit 400 and the pack housing 200, namely the venting channel P.

The venting gas or the like moved to the venting channel P in this way flows out of the battery pack 10 through the discharge port E formed in the side frame 210 through the space between the side frame 210 and the module accommodation unit 400, as shown in FIG. 10.

As briefly mentioned above, the venting channel P provided by the space between the second plate 420 and the side frame 210 and between the side plate 430 and the side frame 210 may have a configuration such as a venting rib that induces the venting gas or the like in a specific direction, destroy the straightness of the venting gas or the like, or weaken the intensity of the venting gas or the like.

Hereinafter, with reference to FIGS. 12 to 17, the configuration of the present disclosure that induces the venting gas or the like generated from the battery module 100 not to flow back toward the bus bar 500 but to be more effectively discharged to the outside in the direction as described above will be described in detail.

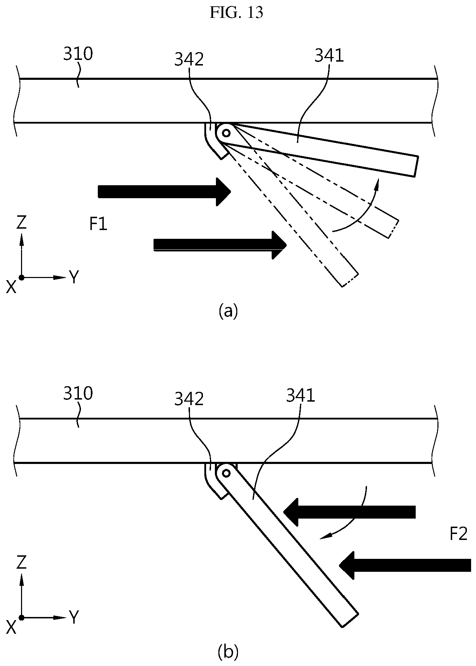

FIG. 12 is a diagram for illustrating a reverse flow blocking unit according to an embodiment of the present disclosure, and FIG. 13 is a diagram for illustrating the operational relationship of the reverse flow blocking unit according to an embodiment of the present disclosure. As shown in FIG. 12 or the like, the splitter 300 of the present disclosure may include at least one reverse flow blocking unit 340 provided on the lower surface of the body plate 310 to selectively suppress a flow toward the module terminal 120 (hereinafter, referred to as 'reverse flow') while the venting gas is flowing.

Specifically, as shown in FIG. 12, the reverse flow blocking unit 340 may extend obliquely in a direction away from the body plate 310. The reverse flow blocking unit 340 may be inclined to extend toward the lower frame 220 in a direction where the venting hole 421 is provided. At this time, the angle (θ) between the outer surface of the reverse flow blocking unit 340, namely one surface of the reverse flow blocking unit 340 facing the venting hole 421, and the body plate 310 may be configured to form an acute angle. A plurality of reverse flow blocking units 340 may be provided on the body plate 310 and arranged to be spaced apart from each other along the front and rear direction (Y-axis direction).

According to this embodiment of the present disclosure, the venting gas or the like discharged due to thermal runaway of the battery module 100 may be discharged into the venting hole 421 along the inner surface of the reverse flow blocking unit 340. The inner surface of the reverse flow blocking unit 340 may mean a surface opposite to the outer surface of the reverse flow blocking unit 340. Accordingly, the flow of venting gas or the like may be guided toward the venting hole 421. In addition, according to this embodiment of the present disclosure, it is possible to reliably prevent the venting gas or the like from colliding with the outer surface of the reverse flow blocking unit 340 and heading toward the bus bar 500 again during reverse flow.

The reverse flow blocking unit 340 may be integrally provided on the lower surface of the body plate 310. As a result, when manufacturing the battery pack 10, the manufacturing process may be facilitated, costs and time may be reduced, and productivity may be improved.

Specifically, referring to FIG. 13, the reverse flow blocking unit 340 according to an embodiment of the present disclosure may include a rotation member 341. The rotation member 341 is rotatably connected to the lower portion of the body plate 310 and may have a plate shape extending in the longitudinal direction. The length of the rotation member 341 may be longer than the height (H1) of the lower space among the spaces divided by the splitter 300.

Accordingly, during the reverse flow of the venting gas or the like, the rotation member 341 may rotate clockwise due to the load so that the end of the rotation member 341 may contact the lower frame 220. According to this embodiment of the present disclosure, the rotation member 341 is restricted from rotating beyond a certain angle, so its position may be fixed at the certain angle.

The reverse flow blocking unit 340 according to an embodiment of the present disclosure may further include a stopper 342. The rotation member 341 may be configured to face the bottom due to its own load or the like, and may also be configured to form an acute angle of 90 degrees or less with the body plate 310 by the stopper 342 that limits the physical movement of the rotation member 341.

The stopper 342 may be disposed farther from the body plate 310 than the rotation member 341. In particular, the stopper 342 may be configured to limit the opening angle of the rotation member 341 to less than a certain angle. The stopper 342 may be provided to form an acute angle with respect to the body plate 310. Accordingly, the outer surface of the rotation member 341 may be configured to form an acute angle of 90 degrees or less with the body plate 310 by the stopper 342. That is, the angle formed between the outer surface of the rotation member 341 and the body plate 310 may be set within an angle range of more than 0° and less than 90°.

The reverse flow blocking unit 340 may be rotatably coupled to the body plate 310 through a separate coupling member (not shown). The coupling member may have an elastic body. For example, the coupling member may be provided as a hinge spring. As a result, the rotation member 341 may maintain a reference angle with the body plate 310 by the elastic force of the elastic body provided in the coupling member in a state where thermal runaway does not occur in the battery module 100.

More specifically, the rotation member 341 may be coupled to the body plate 310 to enable free rotational movement based on the body plate 310. At this time, as shown in FIG. 13(a), when the venting gas or the like moves backward (forward flow), the pressing force of the venting gas applied to the rotation member 341 may increase to be higher than the elastic force of the coupling member to maintain the reference angle. Accordingly, the venting gas or the like rotates counterclockwise due to the flow (F1) of the venting gas or the like moving backward (forward flow). Through this structural combination, the rotation member 341 is configured not to hinder or inhibit the forward flow of the venting gas or the like.

Meanwhile, as shown in FIG. 13(b), when the venting gas flows reversely (F2), namely toward the bus bar 500, since the rotation member 341 rotates clockwise, the rotation member 341 gradually blocks this reverse flow, and furthermore, rotation beyond the reference angle is suppressed by the stopper 342 of the present disclosure, so the position of the rotation member 341 is fixed at the reference angle.

Since the reverse flow of the venting gas or the like toward the bus bar 500 is selectively blocked by the reverse flow blocking unit 340 of the present disclosure, the bus bar 500, the module terminal 120, or the like may be more securely protected from the venting gas or the like, and also the venting gas may be induced to flow out more effectively by applying the above structural of the present disclosure.

Meanwhile, referring to FIG. 12, as described above, the venting hole 421 formed in the second plate 420 is located at a position (H1) lower than the height (H2) where the splitter 300 is installed, when the bus bar 500 is located in the upper space among the spaces divided by the splitter 300. In contrast, depending on the embodiment, when the bus bar 500 is located in the lower space among the aces divided by the splitter 300, the venting hole 421 of the present disclosure is preferably configured to be formed at a position higher than the height of the splitter 300.

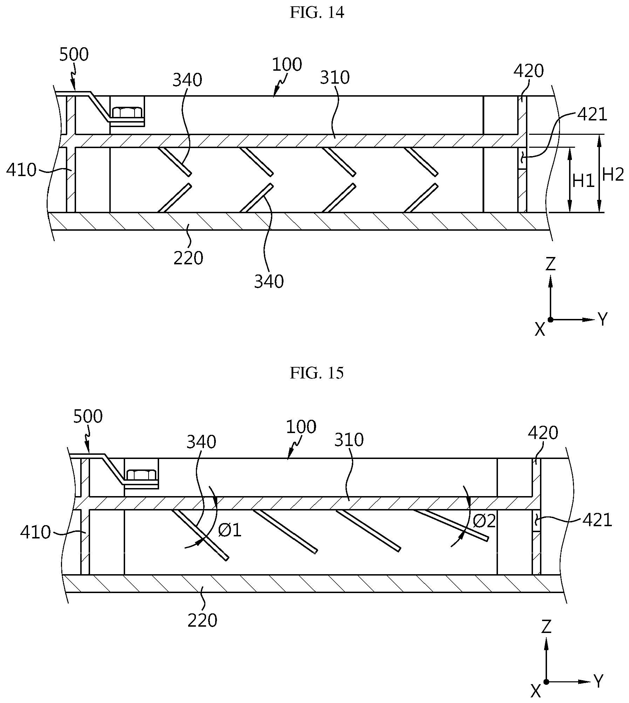

FIG. 14 is a diagram for illustrating a reverse flow blocking unit according to another embodiment of the present disclosure.

Referring to FIG. 14, the reverse flow blocking unit 340 may be provided not only to the body plate 310 but also to the lower frame 220 of the pack housing 200. The reverse flow blocking unit 340 may extend obliquely in a direction away from the lower frame 220. At this time, the angle between the outer surface of the reverse flow blocking unit 340, namely one side of the reverse flow blocking unit 340 facing the venting hole 421, and the lower frame 220 may be configured to form an acute angle. That is, the reverse flow blocking units 340 may be provided to the body plate 310 and the lower frame 220 in shapes that are symmetrical with respect to the horizontal plane.

According to this embodiment of the present disclosure, the venting gas or the like may be guided to the venting hole 421 by the reverse flow blocking unit 340 provided to the lower frame 220 along the inner surface of the reverse flow blocking unit 340. As a result, the venting gas or the like may be guided to the venting hole 421 and quickly discharged to the outside of the module accommodation unit 400 through the venting hole 421.

FIG. 15 is a diagram for illustrating a reverse flow blocking unit according to still another embodiment of the present disclosure.

Referring to FIG. 15, the rotation member 341 according to still another embodiment of the present disclosure may be configured such that the angle between the outer surface of the rotation member 341 and the body plate 310 decreases as it approaches the venting hole 421. That is, the angle (φ1) between the outer surface of the rotation member 341, which is provided furthest from the venting hole 421, and the body plate 310 may be gradually decreased to the angle (φ2) between the outer surface of the rotation member 341, which is provided closest to the venting hole 421, and the body plate 310. At this time, the stopper 342 provided for each rotation member 341 may also be configured so that the angle formed with respect to the body plate 310 decreases as it approaches the venting hole 421.

When the reverse flow blocking unit 340 is provided to the lower frame 220, the angle between the rotation member 341 and the lower frame 220 may also be configured so that the angle with the body plate 310 decreases as the rotation member 341 approaches the venting hole 421.

According to this embodiment of the present disclosure, the venting gas or the like may be minimized from colliding with the inner surface of another rotation member 341 disposed relatively close to the venting hole 421. As a result, the flow of venting gas or the like toward the venting hole 421 is not restricted but may be achieved smoothly.

In addition, according to this embodiment of the present disclosure, if the venting gas or the like flows in the reverse direction toward the bus bar 500, the possibility that he venting gas or the like from colliding with the outer surface of the rotation member 341 located relatively farther from the venting hole 421 may increase. Accordingly, the venting gas or the like may be more effectively prevented from being directed toward the bus bar 500.

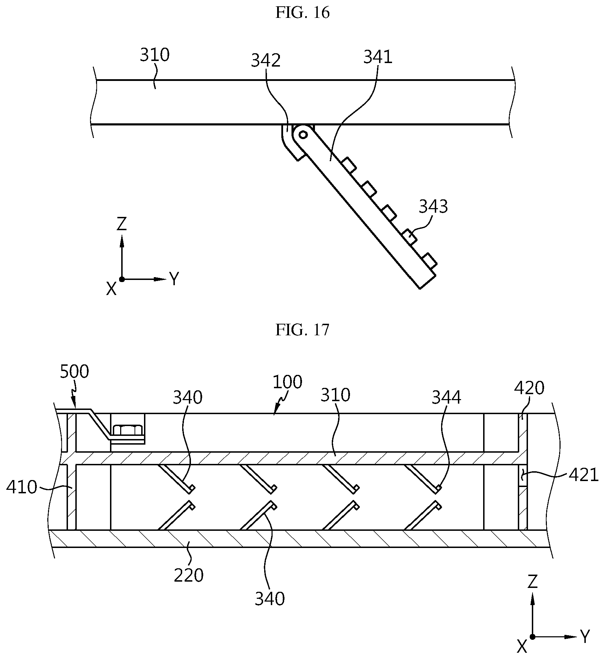

FIG. 16 is a diagram for illustrating a reverse flow blocking unit according to still another embodiment of the present disclosure.

Referring to FIG. 16, the reverse flow blocking unit 340 may further include a protrusion 343. The protrusion 343 may be provided on the outer surface of each rotation member 341, namely on the side surface facing the venting hole 421. The protrusion 343 may be configured to block the flow of sparks or flames generated by the thermal runaway phenomenon of the battery module 100. As an example, a plurality of protrusions 343 may be provided to protrude on the outer surface of the rotation member 341.

If a plurality of protrusions 343 are formed on the outer surface of the rotation member 341 as in the embodiment, when high-temperature particles or flames such as sparks with strong straightness flow reversely, the particles or flames may collide with the protrusions 343 formed on the outer surface of the rotation member 341 disposed relatively close to the venting hole 421 and remain on the outer surface of the rotation member 341. Accordingly, it is possible to reliably block the sparks or flames from heading toward the bus bar 500.

FIG. 17 is a diagram for illustrating a reverse flow blocking unit according to still another embodiment of the present disclosure.

Referring to FIG. 17, the reverse flow blocking unit 340 may further include a bent portion 344. The bent portion 344 may be provided to be bent toward the venting hole 421 at the end of each rotation member 341. The bent portion 344 may be configured to block the flow of venting gas or the like generated by the thermal runaway phenomenon of the battery module 100. According to this embodiment of the present disclosure, the venting gas or the like may collide with the bent portion 344 and remain on the outer surface of the rotation member 341. Accordingly, it is possible to more reliably block the venting gas or the like from heading toward the bus bar 500.

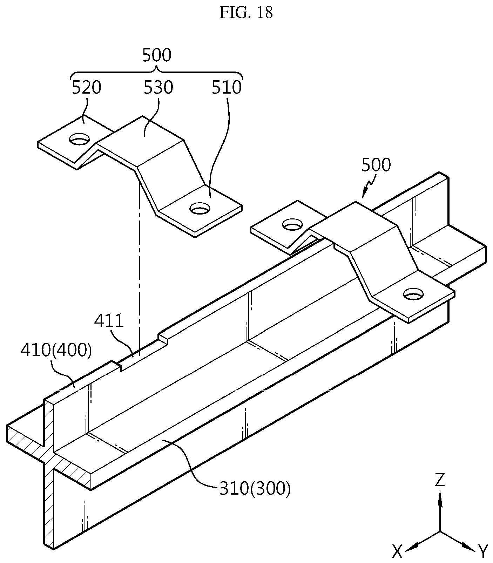

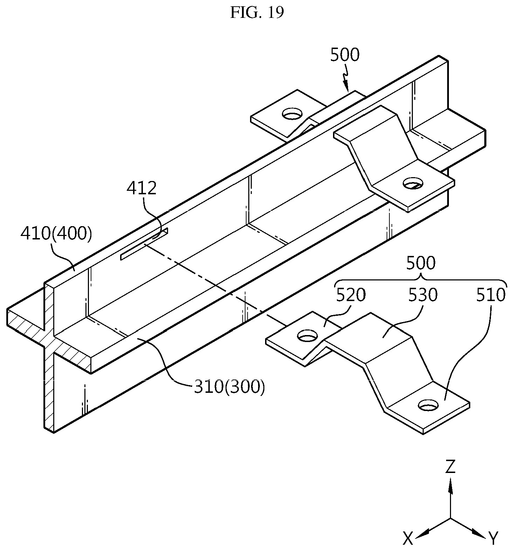

FIGS. 18 and 19 are diagrams for illustrating the structure of a bus bar 500 and a first plate 410 according to an embodiment of the present disclosure.

As illustrated in the drawings, the bus bar 500 of the present disclosure may be configured to include a first branch 510, a second branch 520, and a bridge 530. Depending on the embodiment, the bus bar 500 may be covered with a housing made of a nonconductive material for insulation or the like.

As described above, two battery modules 100 adjacent to each other such that the module terminals 120 thereof face each other are referred to as a first battery module 100-1 and a second battery module 100-2.

The first branch 510 is connected to the module terminal 120 of the first battery module 100-1 located on one side of the first plate 410, and the second branch 520 is connected to the module terminal 120 of the second battery module 100-2, which is the battery module 100 located at a position facing the first battery module 100-1 with the first plate 410 being interposed therebetween.

The first and second branches 510, 520 and the module terminal 120 may be connected to each other by various methods, such as a fastening method using the coupling means 540 as illustrated in the drawings, as well as a joining method such as welding.

The bridge 530, which is a component of the bus bar 500, has a part corresponding to the height (based on Z-axis direction) of the first plate 410 and connects the first and second branches 510, 520.

Calling the components of the bus bar 500 using different names is only for the sake of efficiency of explanation and understanding, so the bus bar 500 may also be implemented in an integrated form by performing a forming method such as press processing to a single member (conductive material such as metal).

If the structural features of the bus bar 500 are implemented as shown in the drawings, the module terminals 120 of the plurality of battery modules 100 independently accommodated in the module accommodation units 400 may be more effectively connected in a state of being physically blocked from each other by the first plate 410.

Preferably, as illustrated in the drawings, a placing groove 411 in which the bus bar 500 is placed may be formed in the first plate 410. If the bus bar 500 is symmetrical in the left and right direction as shown in the drawings, the bridge 530 of the bus bar 500 may be placed in the placing groove 411.

According to this embodiment of the present disclosure, when coupling the pack housing 200 with the upper frame 230, it is possible to avoid a step or clearance, and it is also possible to further improve the airtightness of the pack housing 200 itself.

In addition, as shown in FIG. 19, a through hole 412 through which the bus bar 500 passes may be formed in the first plate 410. Even in this case, an effect equivalent to that of the placing groove 411 described above may be achieved. The first plate 410 may be made in a plate form that is not thick, and the bus bar 500 is also made of a metal material with a shape extending in the longitudinal direction, so that the bus bar 500 may be fitted into the through hole 412 while maintaining the overall geometric characteristics of the bus bar 500.

The battery pack 10 according to the present disclosure may further include a battery management system (not shown). The battery management system (BMS) is mounted in the inner space of the pack housing 200 and may be configured to generally control the charging and discharging operations or data transmission and reception operations of the battery cell or the battery module 100.

In addition, the battery pack 10 according to the present disclosure may further include a battery disconnect unit. The battery disconnect unit (BDU) may be configured to control the electrical connection of battery cells to manage the power capacity and function of the battery pack 10. For this purpose, the battery disconnect unit may include a power relay, a current sensor, a fuse, or the like. The battery disconnect unit is also a configuration provided in a pack unit rather than a module unit, and various disconnect units known at the time of filing of this application may be employed.

Moreover, the battery pack 10 according to the present disclosure may further include various components of battery packs known at the time of filing of this application. For example, the battery pack 10 may further include a manual service disconnector (MSD) that allows an operator to cut off power by manually disconnecting the service plug.

A vehicle (not shown) according to the present disclosure may include the battery pack 10 according to the present disclosure described above. Here, the vehicle (not shown) according to the present disclosure may be, for example, a predetermined vehicle (not shown) that uses electricity as a driving source, such as an electric vehicle or a hybrid electric vehicle. In addition, the vehicle according to the present disclosure may further include various other components included in vehicles, such as a body or a motor, in addition to the battery pack 10 according to the present disclosure.

## Claims

1. A battery pack (10), comprising:
a pack housing (200);
a battery module (100) having a module terminal (120) connected by a bus bar (500);
a module accommodation unit (400) installed in the pack housing to provide an accommodation space in which the battery module (100) is accommodated; and
a splitter (300) configured to divide a part or all of the accommodation space "S" so that the bus bar (500) is located in an independent space,
wherein the splitter (300) includes a body plate (310) connected to at least one of inner surfaces of the module accommodation unit (400) and having a perforation hole (320) formed in a center portion thereof to have a shape corresponding to the battery module,
**characterized in that** the splitter further includes a guider (330) having a shape extending in a vertical direction to guide the coupling of the battery module.

2. The battery pack according to claim 1,
wherein the end of the guider (300) is connected to a bottom surface of the pack housing (200) or the module accommodation unit (400).

3. The battery pack according to any of claims 1 to 2,
wherein the module accommodation unit (400) includes:
a first plate (410) installed in a direction where the module terminal of the battery module (100) is located;
a second plate (420) installed in a direction opposite to the first plate; and
a side plate (430) configured to connect the first and second plates,
wherein the second plate (420) has a venting hole (421) formed to communicate with a venting path "P" formed by the space between a side frame (210) of the pack housing (200) and the module accommodation unit (400).

4. The battery pack according to claim 3,
wherein the venting hole (210) is formed at a position lower than the height of the splitter (300) when the bus bar (500) is located in the upper space among the spaces divided by the splitter, and the venting hole (210) is formed at a position higher than the height of the splitter (300) when the bus bar is located in the lower space among the spaces divided by the splitter.

5. The battery pack according to any of claims 1 to 4,
wherein the splitter (300) further includes at least one reverse flow blocking unit (340) provided on the lower surface of the body plate (310) to selectively suppress a reverse flow toward the module terminal (120) while a venting gas is flowing.

6. The battery pack according to claim 5,
wherein the reverse flow blocking unit (340) includes:
a rotation member (341) rotatably connected to the lower portion of the body plate (310) and configured to form an angle of 90 degrees or less with the body plate (310) at ordinary time; and
a stopper (342) configured to prevent the rotation member (341) from rotating beyond a reference angle due to the reverse flow.

7. The battery pack according to any of claims 1 to 6 and claim 3,
wherein the first plate (410) has a placing groove (411) in which the bus bar (500) is placed or a through hole (412) through which the bus bar (500) passes.

8. The battery pack according to any of claims 1 to 7 and claim 3,
wherein the bus bar (500) includes:
a first branch (510) connected to the module terminal (120) of a first battery module (100-1) located on one side based on the first plate (410);
a second branch (520) connected to the module terminal (120) of a second battery module (100-2) located on the other side based on the first plate (410); and
a bridge (530) configured to connect the first and second branches (510, 520) and having a part corresponding to the height of the first plate.

9. A vehicle, comprising the battery pack according to any one of claims 1 to 8.

## Patentansprüche

1. Batteriepack (10), umfassend:
ein Packgehäuse (200);
ein Batteriemodul (100) mit einem Modulanschluss (120), der durch eine Sammelschiene (500) verbunden ist;
eine Modulaufnahmeeinheit (400), die in dem Packgehäuse installiert ist, um einen Aufnahmeraum bereitzustellen, in dem das Batteriemodul (100) aufgenommen ist; und
einen Teiler (300), der so konfiguriert ist, dass er einen Teil oder den gesamten Aufnahmeraum "S" so teilt, dass sich die Sammelschiene (500) in einem unabhängigen Raum befindet,
wobei der Teiler (300) eine Körperplatte (310) enthält, die mit mindestens einer der inneren Oberflächen der Modulaufnahmeeinheit (400) verbunden ist und ein Perforationsloch (320) aufweist, das in einem mittleren Abschnitt davon ausgebildet ist, um eine Form aufzuweisen, die dem Batteriemodul entspricht,
**dadurch gekennzeichnet, dass** der Teiler ferner eine Führung (330) enthält, die eine Form aufweist, die sich in einer vertikalen Richtung erstreckt, um die Kopplung des Batteriemoduls zu führen.

2. Batteriepack nach Anspruch 1,
wobei das Ende der Führung (300) mit einer Bodenfläche des Packgehäuses (200) oder der Modulaufnahmeeinheit (400) verbunden ist.

3. Batteriepack nach einem der Ansprüche 1 bis 2,
wobei die Modulaufnahmeeinheit (400) enthält:
eine erste Platte (410), die in einer Richtung installiert ist, in der sich der Modulanschluss des Batteriemoduls (100) befindet;
eine zweite Platte (420), die in einer der ersten Platte entgegengesetzten Richtung installiert ist; und
eine Seitenplatte (430), die so konfiguriert ist, dass sie die erste und die zweite Platte verbindet,
wobei die zweite Platte (420) ein Entlüftungsloch (421) aufweist, das so ausgebildet ist, dass es mit einem Entlüftungspfad "P" in Verbindung steht, der durch den Raum zwischen einem Seitenrahmen (210) des Packgehäuses (200) und der Modulaufnahmeeinheit (400) gebildet wird.

4. Batteriepack nach Anspruch 3,
wobei das Entlüftungsloch (210) an einer Position ausgebildet ist, die niedriger ist als die Höhe des Teilers (300), wenn sich die Sammelschiene (500) in dem oberen Raum unter den durch den Teiler geteilten Räumen befindet, und das Entlüftungsloch (210) an einer Position ausgebildet ist, die höher ist als die Höhe des Teilers (300), wenn sich die Sammelschiene in dem unteren Raum unter den durch den Teiler geteilten Räumen befindet.

5. Batteriepack nach einem der Ansprüche 1 bis 4,
wobei der Teiler (300) ferner mindestens eine Rückflussblockiereinheit (340) enthält, die an der unteren Oberfläche der Körperplatte (310) vorgesehen ist, um einen Rückfluss in Richtung des Modulanschlusses (120) selektiv zu unterdrücken, während ein Entlüftungsgas strömt.

6. Batteriepack nach Anspruch 5,
wobei die Rückflussblockiereinheit (340) enthält:
ein Drehelement (341), das drehbar mit dem unteren Abschnitt der Körperplatte (310) verbunden und so konfiguriert ist, dass es im Normalfall einen Winkel von 90 Grad oder weniger mit der Körperplatte (310) bildet; und
einen Anschlag (342), der so konfiguriert ist, dass er das Drehelement (341) daran hindert, sich aufgrund des Rückflusses über einen Referenzwinkel hinaus zu drehen.

7. Batteriepack nach einem der Ansprüche 1 bis 6 und Anspruch 3,
wobei die erste Platte (410) eine Platzierungsnut (411), in der die Sammelschiene (500) platziert ist, oder ein Durchgangsloch (412), durch das die Sammelschiene (500) hindurchgeht, aufweist.

8. Batteriepack nach einem der Ansprüche 1 bis 7 und Anspruch 3,
wobei die Sammelschiene (500) enthält:
einen ersten Zweig (510), der mit dem Modulanschluss (120) eines ersten Batteriemoduls (100-1) verbunden ist, das sich auf einer Seite der ersten Platte (410) befindet;
einen zweiten Zweig (520), der mit dem Modulanschluss (120) eines zweiten Batteriemoduls (100-2) verbunden ist, das sich auf der anderen Seite der ersten Platte (410) befindet; und
eine Brücke (530), die so konfiguriert ist, dass sie den ersten und den zweiten Zweig (510, 520) verbindet und einen Teil aufweist, der der Höhe der ersten Platte entspricht.

9. Fahrzeug, umfassend das Batteriepack nach einem der Ansprüche 1 bis 8.

## Revendications

1. Un bloc-batterie (10), comprenant :
un boîtier de bloc (200) ;
un module de batterie (100) ayant une borne de module (120) connectée par une barre omnibus (500) ;
une unité de logement de module (400) installée dans le boîtier de bloc pour fournir un espace de logement dans lequel le module de batterie (100) est logé ; et
un séparateur (300) configuré pour diviser une partie ou la totalité de l'espace de logement « S » de sorte que la barre omnibus (500) soit située dans un espace indépendant,
dans lequel le séparateur (300) inclut une plaque de corps (310) connectée à au moins une des surfaces intérieures de l'unité de logement de module (400) et ayant un trou de perforation (320) formé dans une partie centrale de celle-ci pour avoir une forme correspondant au module de batterie, **caractérisé en ce que** le séparateur inclut en outre un guide (330) ayant une forme s'étendant dans une direction verticale pour guider le couplage du module de batterie.

2. Le bloc-batterie selon la revendication 1,
dans lequel l'extrémité du guide (300) est connectée à une surface inférieure du boîtier de bloc (200) ou de l'unité de logement de module (400).

3. Le bloc-batterie selon l'une quelconque des revendications 1 à 2,
dans lequel l'unité de logement de module (400) inclut :
une première plaque (410) installée dans une direction où la borne de module du module de batterie (100) est située ;
une seconde plaque (420) installée dans une direction opposée à la première plaque ; et
une plaque latérale (430) configurée pour connecter les première et seconde plaques,
dans lequel la seconde plaque (420) a un trou de ventilation (421) formé pour communiquer avec un chemin de ventilation « P » formé par l'espace entre un cadre latéral (210) du boîtier de bloc (200) et l'unité de logement de module (400).

4. Le bloc-batterie selon la revendication 3,
dans lequel le trou de ventilation (210) est formé à une position plus basse que la hauteur du séparateur (300) lorsque la barre omnibus (500) est située dans l'espace supérieur parmi les espaces divisés par le séparateur, et le trou de ventilation (210) est formé à une position plus haute que la hauteur du séparateur (300) lorsque la barre omnibus est située dans l'espace inférieur parmi les espaces divisés par le séparateur.

5. Le bloc-batterie selon l'une quelconque des revendications 1 à 4,
dans lequel le séparateur (300) inclut en outre au moins une unité de blocage de flux inverse (340) prévue sur la surface inférieure de la plaque de corps (310) pour supprimer sélectivement un flux inverse vers la borne de module (120) pendant qu'un gaz de ventilation s'écoule.

6. Le bloc-batterie selon la revendication 5,
dans lequel l'unité de blocage de flux inverse (340) inclut :
un élément de rotation (341) connecté de manière rotative à la partie inférieure de la plaque de corps (310) et configuré pour former un angle de 90 degrés ou moins avec la plaque de corps (310) en temps normal; et
une butée (342) configurée pour empêcher l'élément de rotation (341) de tourner au-delà d'un angle de référence en raison du flux inverse.

7. Le bloc-batterie selon l'une quelconque des revendications 1 à 6 et la revendication 3,
dans lequel la première plaque (410) a une rainure de placement (411) dans laquelle la barre omnibus (500) est placée ou un trou traversant (412) à travers lequel la barre omnibus (500) passe.

8. Le bloc-batterie selon l'une quelconque des revendications 1 à 7 et la revendication 3,
dans lequel la barre omnibus (500) inclut :
une première branche (510) connectée à la borne de module (120) d'un premier module de batterie (100-1) situé d'un côté sur la base de la première plaque (410) ;
une seconde branche (520) connectée à la borne de module (120) d'un second module de batterie (100-2) situé de l'autre côté sur la base de la première plaque (410) ; et
un pont (530) configuré pour connecter les première et seconde branches (510, 520) et ayant une partie correspondant à la hauteur de la première plaque.

9. Un véhicule, comprenant le bloc-batterie selon l'une quelconque des revendications 1 à 8.
